# EUROPEAN PATENT APPLICATION

(11) **EP 3 611 372 A1**
(43) Date of publication of application: **19.02.2020**
(21) Application number: 18188677.1
(22) Date of filing: 13.08.2018
(51) Int. Cl.: F03D 80/00

(54) **NACELLE FOR A WIND TURBINE INSTALLATION, WIND TURBINE INSTALLATION WITH THE NACELLE AND METHOD TO ASSEMBLE THE WIND TURBINE INSTALLATION**

(71) Applicant: youWINenergy GmbH, 27568 Bremerhaven (DE)
(72) Inventor: ROHDEN, Rolf, 26607 Aurich (DE)
(74) Representative: Bird & Bird LLP

(57) **Abstract**

Nacelle arranged for a wind turbine installation and arranged to house an electrical generator of the wind turbine installation, the nacelle comprising a nacelle base arranged to be rotatably supported by a tower of the wind turbine installation, a nacelle lid (1) mechanically connected with the nacelle base, wherein the nacelle lid comprises several lid segments (1a, 1b, 1c), wherein a second (1b) of the lid segments is arranged between and mechanically connected with a first (1a) and a third (1c) of the lid segments.

## Description

The present invention relates to a nacelle arranged for a wind turbine installation, wind turbine installation with the nacelle and method to assemble the wind turbine installation. The invention can be used advantageously with a new and an existing wind turbine installation.

Applicant knows of a wind turbine installation having a nacelle, which comprises a base and a lid. The known nacelle forms a container which houses many of the components of a wind turbine installation including the generator, drive train, cooling system, fans, platform, brake assembly etc. One of the functions of the nacelle is to protect the important technical parts of the wind turbine from harsh environment. The construction has to resist these environmental conditions.

### Problem and solution

The cost and effort of some wind turbine installations including their assembly at an installation site has been considered too high.

It is an object of the invention to reduce the cost and effort of assembling the wind turbine installation.

The object is achieved by the nacelle of claim 1 which is arranged for a wind turbine installation (first aspect), by a wind turbine installation with the nacelle (second aspect) and by a method to assemble the wind turbine installation (third aspect).

The nacelle is arranged for a wind turbine installation and is arranged to house an electrical generator of the wind turbine installation the nacelle comprises a nacelle base which is arranged to be rotatably supported by a tower of the wind turbine installation. Further, the nacelle comprises a nacelle lid which is mechanically connected with the nacelle base. The nacelle lid comprises several lid segments and a second of the lid segments is arranged between and mechanically connected with a first and a third of the lid segments.

The segmented lid contributes to reducing the cost and effort of its transport to the installation site as its lid segments are smaller. Further, the effort while assembling the wind turbine installation is less since the handling of the smaller and lighter lid segments can be simplified. Also, the segmented lid permits to increase the inner volume of the nacelle but keeps the cost and effort of transporting and handling at bay. The quality of the nacelle can be improved and/or the cost of its manufacturing by the lid segments.

### Preferred embodiments

Preferred embodiments explained in the following can be combined with each other, advantageously, unless stated otherwise.

Preferably, one or more of the lid segments are made with a metal. At least one of the lid segments is arranged to receive a part of a load coming from a wind turbine rotor of the wind turbine installation and/or a part of a wind load imposed on an outer surface of the nacelle. The at least one lid segment is arranged to transfer these loads to another load bearing component of the wind turbine installation. One or more of the lid segments can be made from steel. With this lid segment the nacelle lid can act as a load bearing component. This can help to increase the mechanical stability and durability of the nacelle lid. One or more of the lid segments can be made from aluminium, which may lead to a lighter lid segment and to a reduced thermal resistance of the lid segment. This may help to increase the heat flux and to transfer thermal energy to the ambient air or wind.

In a preferred embodiment, the first lid segment is mechanically connected with the nacelle base. Further, the third lid segment can be mechanically connected with the nacelle base. This may help to absorb forces imposed on the nacelle lid by the wind.

At least one of the lid segments of a further preferred embodiment has the shape of a frustum of a hollow body chosen from the following group including a cylinder, a sphere, a cone, a ellipse and a hollow box. The lid segments can be shell shaped. The lid segments can be shaped to extend along a longitudinal axis of the hollow body or along a circumference of the hollow body.

In a further preferred embodiment, a stator of the electrical generator arranged inside the nacelle and can be mechanically connected with at least one of the lid segments. The lid segment(s) to be mechanically connected with the stator, can be made from metal, particularly from steel. This may allow to fix the generator inside the nacelle without a supporting rack.

Another preferred embodiment comprises fins arranged for exchanging or transferring thermal energy to the ambient air or wind. These fins can extend from an outer surface of at least one of the lid segments. A line of several such fins can extend along a longitudinal axis of the nacelle. The lid segment can be made from metal, particularly from aluminium. This can help to increase the heat flux to the ambient air and to remove thermal energy from inside of the nacelle.

A further preferred embodiment comprises at least one lid segment having at least one channel arranged for guiding a temperate fluid and arranged at an inner surface of the lid segment. The channel wall can be connected with the outer surface of the lid segment in a heat conducting manner. The lid segment can be made from metal, particularly from aluminium. The temperate fluid can be driven through the channel, the generator and/or power electronic components by a pump of the wind turbine installation, particularly for cooling. This may help to transfer thermal energy from inside of the nacelle to the ambient air or wind. Further, a larger generator producing more waste heat can be chosen. Improved cooling of the generator may permit to form the rotor's magnetic elements electromagnetically interacting with the stator of the generator with aluminium instead of copper.

Preferably, the channel is designed as a pipe section. The longitudinal axis of the pipe and the rotational axis of the wind turbine rotor can form an angle of less than 10°. The pump of the wind turbine installation can be arranged to drive the temperate fluid through the channel such that an essentially countercurrent flow of the temperate fluid and the wind streaming about the nacelle is achieved. This may increase the heat flux from inside the nacelle to the ambient air or wind streaming about the nacelle.

According to a preferred embodiment, the channel is limited by two spaced apart sheets of the lid segment. The sheets are spaced apart from each other and can be connected with each other by rods or struts. An outer sheet may be in physical and thermal contact with the ambient air while an inner sheet limits the nacelle's interior. The temperate fluid can be driven through the channel, the generator and/or power electronic components by a pump of the wind turbine installation, particularly for cooling The pump can be arranged to drive the temperate fluid through the channel such that an essentially countercurrent flow of the temperate fluid and the wind streaming about the nacelle is achieved. This channel permits to increase the heat flux from inside the nacelle to the ambient air or wind streaming about the nacelle. Improved cooling of the generator may permit to form the rotor's magnetic elements electromagnetically interacting with the stator of the generator with aluminium instead of copper.

Preferably, the two spaced apart sheets are made from different materials. The outer sheet can be made with aluminium and the inner sheet with steel. This may help to increase the heat flux from inside the nacelle to the ambient air to the wind streaming about the nacelle. Further, the inner sheet made with steel can increase the mechanical stability of the nacelle lid.

At least one of the lid segments of a preferred embodiment has one, two or more flanges arranged for being mechanically connected with an adjacent lid segment or with the nacelle base. Two of the lid segments can be mechanically connected with each other by a fastening element. The fastening element can be designed to clamp two flanges, i.e. a flange of each of the lid segments. This may increase the mechanical stability of the lid segment. Further, mechanically connecting the lid segment with another of the lid segments can be simplified. This embodiment can help to facilitate assembly the wind turbine installation at the installation site.

Another preferred embodiment comprises at least one turbine rotor brake, which is mounted on one of the lid segments, and which is arranged to apply a braking force on a wind turbine rotor of the wind turbine installation. The lid segment can be made with a metal, particularly with steel. This may help to stop the wind turbine rotor.

A further preferred embodiment comprises a winch holding beam, which is mechanically connected with one of the lid segments and is arranged to support a winch. The winch can be used for moving a heavy member inside the nacelle when assembling the wind turbine installation, for mounting the generator or during maintenance of the wind turbine installation. The lid segment, which is mechanically connected with the winch holding beam, can be made with a metal, particularly with steel. This may help to avoid a rack for the winch. The embodiment can further comprise the winch, which can be slidingly supported by the winch holding beam and can be shifted along the winch holding beam inside the nacelle. This can simplify assembling the wind turbine installation and maintenance of the wind turbine installation.

According to another preferred embodiment, a wind turbine rotor locking device is mounted on one of the lid segments, and is arranged to lock the rotor during maintenance. The lid segment can be made with a metal, particularly with steel. This may simplify the maintenance of the wind turbine installation.

A preferred embodiment, comprises a nacelle platform structure, which is arranged for a technician to walk on and to work on, arranged adjacent to the nacelle base, and which is mechanically connected with at least one of the lid segments. The platform can also serve to support other members of the wind turbine installation. The lid segment can be made with a metal, particularly with steel. This may help to make maintenance of the wind turbine installation more convenient.

In a preferred embodiment, the nacelle, particularly one of the lid segments, is arranged to support a rotor hub of the wind turbine installation, wherein a rotor blade extends from the rotor hub. The lid segment can be made with a metal, particularly with steel. This may help to avoid a separate fixture for the rotor hub.

The wind turbine installation according to the second aspect comprises a nacelle as explained above. The nacelle is rotatably supported by the tower of the wind turbine installation. A yaw bearing is mechanically connected with the nacelle base and the tower. The wind turbine installation has a generator which is arranged inside the nacelle. The stator of the generator can be mechanically connected with one or more of the lid segments.

The method according to the third aspect serves to assemble the wind turbine installation as explained above. The method comprises the following steps:
- S1: positioning the base on top of the tower, particularly on top of a yaw bearing of the wind turbine installation supported by the tower,
- S2: mechanically connecting a first of the lid segments (first lid segment) with the base,
- S3: mechanically connecting a second of the lid segments (second lid segment) with the first lid segment.

### Exemplary embodiments

Further advantages become apparent to the skilled person from the following exemplary embodiment(s).

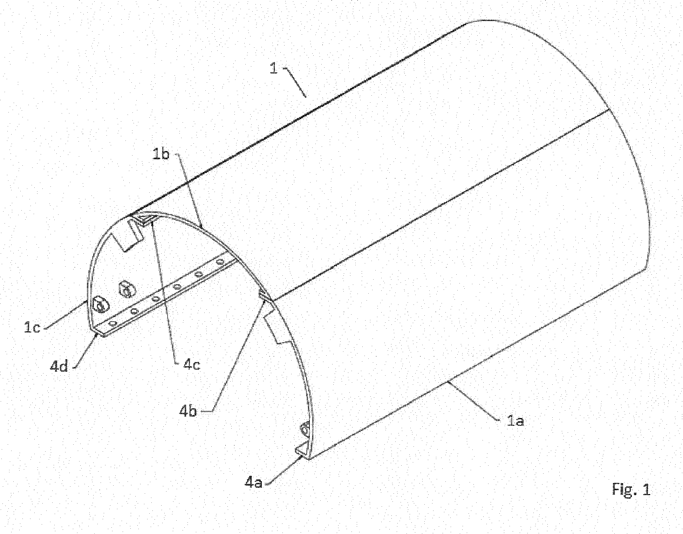

Fig. 1 shows the nacelle lid 1 of an exemplary embodiment of a nacelle. The nacelle lid has three lid segments 1a, 1b, 1c, which are shell shaped and are made from metal. The lid segments have the shape of a frustum of a hollow cylinder. Flanges 4a, 4b, 4c, 4d of the flanges add to the mechanical stability of the lid segments and simplify the assembly of the nacelle lid. Bolts of rivets can be inserted into holes of the flanges for mechanically connecting two adjacent lid segments. The nacelle base, with which lid segments 1a, 1c can be connected, is not shown. The stator of the generator (not shown) can be mechanically connected with one or more of the lid segments. The lid segment(s) to be mechanically connected with the stator, can be made from metal, particularly from steel. This may allow to fix the generator inside the nacelle without a supporting rack.

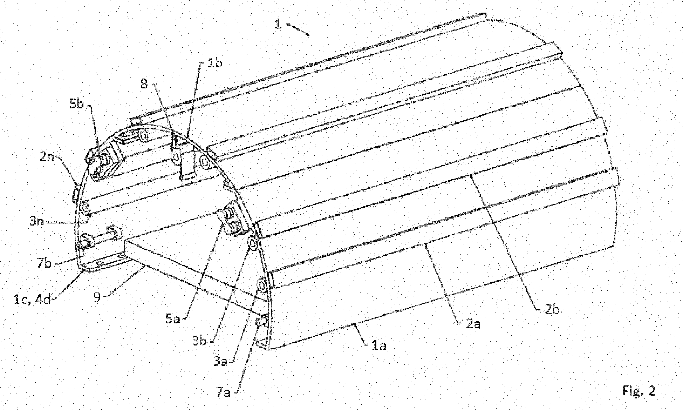

Fig. 2 shows the nacelle lid 1 of another exemplary embodiment of a nacelle. The nacelle lid has three lid segments 1a, 1b, 1c, which are shell shaped and are made from metal. The lid segments have the shape of a frustum of a hollow cylinder. Flanges of the flanges add to the mechanical stability of the lid segments and simplify the assembly of the nacelle lid. Bolts of rivets can be inserted into holes of the flanges for mechanically connecting two adjacent lid segments. The nacelle base, with which lid segments 1a, 1c can be connected, is not shown. The stator of the generator (not shown) can be mechanically connected with one or more of the lid segments. The lid segment(s) to be mechanically connected with the stator, can be made from metal, particularly from steel. This may allow to fix the generator inside the nacelle without a supporting rack.

Two fins 2a, 2b and two channels 3a, 3b extend along the first lid segment 1a for a larger heat flux through the lid segment. The channels are connected with the outer surface of the lid segment in a heat conducting manner. A pump of the superordinate wind turbine installation can drive a temperate fluid through these channels and the generator to be arranged inside the nacelle. Lid segments 1b, 1c are also equipped with fins 3n and channels 2n

Two turbine rotor brakes 5a, 5b are mounted on lid segments 1a, 1c, and are arranged to apply a braking force on a wind turbine rotor (not shown) of the wind turbine installation. Two turbine rotor locking devices 7a, 7b are also mounted on lid segments 1a, 1c. Lid segment 1b comprises a winch holding beam 8 mechanically connected with lid segment 1b and arranged to support a winch (not shown). The winch can be used for moving a heavy member inside the nacelle when assembling the wind turbine installation, for mounting the generator or during maintenance of the wind turbine installation. The winch holding beam allows to shift the winch along the beam and inside the nacelle. The nacelle base 9 is arranged near the nacelle base (not shown) and is mechanically connected to flanges 4d of lid segments 1a, 1c.

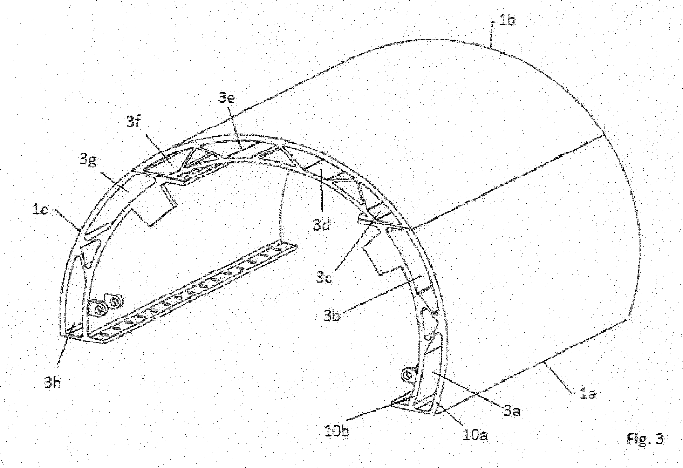

Fig. 3 shows the nacelle lid 1 of another exemplary embodiment of a nacelle. The nacelle lid has three lid segments 1a, 1b, 1c, which are shell shaped and are made from metal. The lid segments have the shape of a frustum of a hollow cylinder. Flanges of the flanges add to the mechanical stability of the lid segments and simplify the assembly of the nacelle lid. Bolts of rivets can be inserted into holes of the flanges for mechanically connecting two adjacent lid segments. The nacelle base, with which lid segments 1a, 1c can be connected, is not shown. The stator of the generator (not shown) can be mechanically connected with one or more of the lid segments.

The lid segments 1a, 1b, 1c comprise two sheets 10a, 10b, each. The two sheets of the first lid segment 1a limit channels 3a, 3b arranged for guiding the temperate fluid and are connected with each other by struts. The outer sheet 10a is made with aluminium to improve the heat flux which the inner sheet 10b is made with steel for increased mechanical stability. A pump of the superordinate wind turbine installation is arranged to drive a temperate fluid through the channels 3a-3h of the lid segments 1a, 1b, 1c. In combination, the spaced apart sheets and the struts also serve to increase the mechanical stability and durability of the nacelle lid.

### Reference signs

1 nacelle lid
1a, 1b, 1c
   lid segment
2, 2a, 2b
   cooling fin
3, 3a, 3b
   channel for a temperate fluid
4, 4a, 4b
   flange of a lid segment
5, 5a, 5b
   turbine rotor brake
7, 7a, 7b
   turbine rotor lock
8 winch holding beam
9 nacelle platform structure
10, 10a, 10b
   sheets of one of the lid segments

## Claims

1. Nacelle arranged for a wind turbine installation and arranged as a housing for an electrical generator of the wind turbine installation, the nacelle comprising
a nacelle base arranged to be rotatably supported by a tower of the wind turbine installation,
a nacelle lid (1) mechanically connected with the nacelle base,
wherein the nacelle lid comprises several lid segments (1a, 1b, 1c),
wherein a second (1b) of the lid segments is arranged between and mechanically connected with a first (1a) and a third (1c) of the lid segments.

2. Nacelle according to claim 1, wherein one of the lid segments is arranged to be mechanically connected with a stator of the electrical generator arranged inside the nacelle.

3. Nacelle according to one of the preceding claims, wherein one of the lid segments is made from metal and is arranged to receive at least part of a load coming from a wind turbine rotor of the wind turbine installation and/or at least part of a wind load imposed on an outer surface of the nacelle.

4. Nacelle according to one of the preceding claims, wherein one of the lid segments comprises a fin (2) arranged to transfer thermal energy to the ambient air.

5. Nacelle according to one of the preceding claims, wherein one of the lid segments comprises a channel (3) arranged for guiding a temperate fluid.

6. Nacelle according claim 5, wherein the channel is designed as a pipe section.

7. Nacelle according claim 5, wherein the channel is limited by two spaced apart sheets (10a, 10b) of the lid segment.

8. Nacelle according to claim 7, wherein the two spaced apart sheets are made from different materials.

9. Nacelle according to one of the preceding claims, wherein one of the lid segments has a flange (4) arranged for being mechanically connected with an adjacent lid segment or with the nacelle base.

10. Nacelle according to one of the preceding claims, further comprising a turbine rotor brake (5) mounted on one of the lid segments, the rotor brake being arranged to apply a braking force on a turbine rotor of the wind turbine installation.

11. Nacelle according to one of the preceding claims, further comprising a winch holding beam (8), which is mechanically connected with one of the lid segments and is arranged to support a winch.

12. Nacelle according to one of the preceding claims, further comprising a turbine rotor locking device (7), which is mounted on one of the lid segments, and is arranged to lock the rotor during maintenance.

13. Nacelle according to one of the preceding claims, further comprising a nacelle platform structure (9), which is arranged for a technician to walk on, arranged adjacent to the nacelle base, and which is mechanically connected with at least one of the lid segments.

14. Nacelle according to one of the preceding claims, wherein the nacelle, particularly one of the lid segments, is arranged to support a rotor hub of the wind turbine installation, wherein a rotor blade extends from the rotor hub.

15. Wind turbine installation comprising the nacelle according to any of the preceding claims, wherein the nacelle is rotatably supported by the tower of the wind turbine installation, wherein a yaw bearing is mechanically connected with the nacelle base and the tower.

16. Method to assemble the wind turbine installation according to claim 15, comprising the steps
S1 positioning the base on top of the tower, particularly on top of a yaw bearing of the wind turbine installation supported by the tower,
S2 mechanically connecting a first of the lid segments with the base,
S3 mechanically connecting a second of the lid segments with the first lid segment.
